# EUROPÄISCHE PATENTSCHRIFT

(11) **EP 3 261 743 B1**
(45) Veröffentlichungstag und Bekanntmachung des Hinweises auf die Patenterteilung: **24.04.2019**
(21) Anmeldenummer: 16706329.6
(22) Anmeldetag: 17.02.2016
(51) Int. Cl.: B01D 36/00, B01D 46/24, B01D 29/15, B01D 29/54

(54) **ROTATIONSSYMMETRISCHER ENDABSCHEIDER MIT STÜTZKÖRPER**
ROTATIONALLY SYMMETRICAL FINAL SEPARATOR WITH SUPPORT STRUCTURE
MOYEN DE FILTRAGE TERMINAL À SYMÉTRIE DE RÉVOLUTION AVEC CORPS DE SUPPORT

(30) Priorität: 23.02.2015 DE 202015103196 U; 23.02.2015 DE 102015203211; 19.06.2015 DE 102015211376
(43) Veröffentlichungstag der Anmeldung: 03.01.2018
(73) Patentinhaber: Mahle International GmbH, 70376 Stuttgart (DE)
(72) Erfinder: KOLLMANN, Andreas, 9421 Eitweg (AT); ZAUSNIG, Peter, 9173 St. Margareten (AT)
(74) Vertreter: BRP Renaud & Partner mbB Rechtsanwälte Patentanwälte Steuerberater
(86) Internationale Anmeldenummer: PCT/EP2016/053367
(87) Internationale Veröffentlichungsnummer: WO 2016/135022

(56) Entgegenhaltungen:
- EP-A1- 2 735 353
- WO-A1-2011/107262
- WO-A1-2014/057323
- DE-U1-202008 015 440
- US-A1- 2014 144 112
- US-B1- 7 828 870
- US-B1- 7 867 311

## Beschreibung

Die vorliegende Erfindung betrifft einen rotationssymmetrischen Endabscheider einer Filtereinrichtung gemäß dem Oberbegriff des Anspruchs 1. Die Erfindung betrifft außerdem eine Filtereinrichtung mit einem solchen Endabscheider.

Um Korrosionsschäden in modernen Brennkraftmaschinen möglichst minimieren zu können, ist es erforderlich, einen im Kraftstoff enthaltenen Wasseranteil soweit wie möglich zu reduzieren. Dies wird beispielsweise durch sogenannte Koaleszer oder Endabscheider erreicht, wobei derartige Endabscheider üblicherweise ein hydrophobes Sieb aufweisen, welches für Kraftstoff durchlässig ist, für Wasser hingegen eine Barriere bildet. Das aus dem Kraftstoff abgeschiedene Wasser wird dann in einer zugehörigen Filtereinrichtung üblicherweise in einem unten angeordneten Wassersammelraum gesammelt, in welchem es aufgrund seiner Schwerkraft ohne weitere Förderung einfach absinkt. Derartige Endabscheider sind hinlänglich bekannt, wobei es oftmals problematisch ist, das aus dem Kraftstoff am Endabscheider abgeschiedene Wasser möglichst schnell in den Wassersammelraum abzuleiten, um ein unerwünschtes Durchdringen des Endabscheiders auf jeden Fall verhindern zu können.

Aus der EP 2 548 624 A1 ist ein gattungsgemäßer rotationssymmetrischer Endabscheider einer Filtereinrichtung bekannt, welcher zur Wasserableitung einen schraubenförmigen Gang um den Endabscheider herum aufweist, an welchem das abgeschiedene Wasser schraubenförmig nach unten in einen Wassersammelraum entlang laufen kann. Nachteilig bei dem aus dem Stand der Technik bekannten rotationssymmetrischen Endabscheider ist jedoch der vergleichsweise lange Ablaufweg des aus dem Kraftstoff abgeschiedenen Wasseranteils entlang des Schraubengangs. WO2014/057323 zeigt ebenfalls einen rotationssymmetrischen Endabscheider.

Die vorliegende Erfindung beschäftigt sich daher mit dem Problem, für einen Endabscheider der gattungsgemäßen Art eine verbesserte oder zumindest eine alternative Ausführungsform anzugeben, welche sich insbesondere durch eine verbesserte Wasserableitung, eine einfache Herstellung und einen flexiblen Einsatz auszeichnet.

Dieses Problem wird erfindungsgemäß durch zwei alternative aber gleichwertige Ausführungsformen entsprechend den Gegenständen der unabhängigen Ansprüche gelöst. Vorteilhafte Ausführungsformen sind Gegenstand der abhängigen Ansprüche.

Die vorliegende Erfindung beruht gemäß der ersten Alternative auf dem allgemeinen Gedanken, einen Endabscheider mit einem Abscheidekörper mit einem rotationssymmetrischen, kegelstumpfartigen und hydrophoben Sieb vorzusehen, wobei der kegelstumpfartige Abscheidekörper im Betriebszustand kopfüber angeordnet ist und sich dadurch nach unten konisch verjüngt. Hierdurch kann eine Adhäsionskraft sowie eine Kontaktfläche des an dem Abscheidekörper abgeschiedenen Wassers mit dem Abscheidekörper deutlich reduziert werden, da auf das abgeschiedene Wasser nunmehr auch eine senkrecht nach unten gerichtete Schwerkraftkomponente wirkt, die versucht, den abgeschiedenen Wassertropfen vom Abscheidekörper abzuheben. Ein Kontakt des abgeschiedenen Wassers mit dem Abscheidekörper ist somit ausschließlich im Betriebszustand durch den strömenden Kraftstoffstrom bedingt, so dass im Nichtbetriebszustand das am Abscheidekörper abgeschiedene Wasser aufgrund der Schwerkraft und der überhängenden Abscheidewände des Abscheidekörpers vom Abscheidekörper löst und einfach nach unten in den Wassersammelraum sinken kann oder aufgrund geringerer Adhäsionskräfte zwar am Abscheidekörper verbleibt, jedoch deutlich leichter an diesem abläuft. Um den Endabscheider auch in herkömmlichen Filtereinrichtungen einsetzen zu können, ist eine rotationssymmetrische Zarge mit außenliegenden Stützringen vorgesehen. Zwischen den Stützringen und dem Abscheidekörper sind dabei Konusstege vorgesehen, die über Radialstege gegenüber den Stützringen abgestützt sind, wobei die Konusstege entlang der Außenseite des Abscheidekörpers verlaufen und wobei zwischen dem Abscheidekörper und den Stützringen ein in Axialrichtung und in Umfangsrichtung durchströmbarer Zwischenraum angeordnet ist. Durch diesen in Umfangsrichtung durchgängigen Zwischenraum kann insbesondere eine Tangentialströmung um den Abscheidekörper ermöglicht werden, die zu einer verbesserten Wasserabscheidung beiträgt. Mit dem erfindungsgemäß vorgesehenen, rotationssymmetrischen Endabscheider kann somit nicht nur die Wasserabscheidung deutlich verbessert werden, da die Ableitung des abgeschiedenen Wasser beschleunigt und deren Kontakt zum Abscheidekörper reduziert wird, sondern dieser erfindungsgemäße Endabscheider kann auch besonders flexibel in gängigen Filterelementen eingesetzt werden, da seine Außenkontur zudem zylindrisch gestaltet ist und dadurch einen Faltenstern eines den Endabscheider umgebenden Faltenstern des Ringfilterelements abstützt. Die Neigung des Abscheidekörpers kann dabei zirka 5° bezüglich der Vertikalen betragen, wobei gilt, je größer der Neigungswinkel, umso geringer ist der Kontakt des abgeschiedenen Wassers mit dem Abscheidekörper und umso geringer sind auch die zwischen diesen beiden Bestandteilen wirkende Adhäsionskräfte.

Bei einer vorteilhaften Weiterbildung der erfindungsgemäßen Lösung ist die Zarge als Kunststoffspritzgussteil ausgebildet, wobei der Abscheidekörper zumindest in den Kunststoff der Konusstege eingebettet ist. Hierdurch kann eine zuverlässige Halterung des Abscheidekörpers an den Konusstegen gewährleistet und dadurch insgesamt ein vergleichsweise stabiler Endabscheider geschaffen werden.

Bei einer weiteren vorteilhaften Ausführungsform der erfindungsgemäßen Lösung ist der Abscheidekörper an zumindest einem Stirnende in einem ringförmigen Halter gefangen. Vorzugsweise sind sogar beide Stirnenden in einem jeweiligen ringförmigen Halter gefangen, wobei einer der beiden Halter, üblicherweise der obere Halter, zugleich als Dichtelement ausgebildet ist. Über einen derartigen als Dichtelement ausgebildeten oberen Halter kann der Endabscheider dicht in eine entsprechende kreisförmige Ausnehmung einer ersten Endscheibe des Ringfilterelements eingreifen. Der als Dichtelement ausgebildete Halter kann dabei aus demselben Kunststoff ausgebildet sein, wie die Konusstege und die Stützringe der Zarge oder aber auch aus einem speziellen Dichtkunststoff, so dass in diesem Fall die Zarge beispielsweise als Zweikomponenten-Spritzgussteil hergestellt werden kann.

Bei einer vorteilhaften Weiterbildung der erfindungsgemäßen Lösung ist der Abscheidekörper wie beschrieben an beiden Stirnenden in einem ringförmigen Halter gefangen, wobei die beiden Halter einen kleineren Durchmesser aufweisen als die Stützringe. Zusätzlich weist der obere Halter üblicherweise einen größeren Durchmesser auf als der untere Halter, wodurch die umgekehrte Kegelstumpfform realisiert wird. Dabei kann vorgesehen sein, dass der Abscheidekörper sowohl in den Kunststoff des oberen als auch in den Kunststoff des unteren Halters eingebettet, das heißt beispielsweise von diesem zumindest teilweise umspritzt ist. Durch die Verbindung der beiden Halter mit den Stegen kann eine besonders steife Zarge realisiert werden.

Die vorliegende Erfindung beruht weiter auf dem allgemeinen Gedanken, einen zuvor beschriebenen Endabscheider in einer Filtereinrichtung, beispielweise einem Kraftstofffilter oder einem Schmierstofffilter einzusetzen. Hierbei wird der Endabscheider in ein Ringfilterelement eingesetzt und kann dabei zugleich mit seiner Zarge, das heißt insbesondere mit seinen außenliegenden Stützringen, den Faltenstern des Ringfilterelements abstützen. Da die Außenkontur des Endabscheiders zylindrisch ist, kann der erfindungsgemäße Endabscheider auch bei herkömmlichen Filtereinrichtungen und herkömmlichen Ringfilterelementen eingesetzt werden, wodurch ein besonders flexibler Einsatz ermöglicht wird. Bei einer vorteilhaften Weiterbildung der erfindungsgemäßen Filtereinrichtung greift der Endabscheider mit seinem Abscheidekörper durch die zweite, das heißt im vorliegenden Fall die untere, Endscheibe des Ringfilterelements hindurch und begrenzt mit dieser einen ringförmigen Wasserdurchlass in einem darunter angeordneten Wassersammelraum der Filtereinrichtung. Die äußere Wandung des ringförmigen Wasserdurchlasses wird dabei durch einen ringförmigen axialen Fortsatz der unteren Endscheibe des Ringfilterelements gebildet. Mittels des konischen Endabscheiders kann somit auf konstruktiv äußerst einfache Weise ein Abscheidekanal für aus dem Kraftstoff abgeschiedenes Wasser realisiert werden.

Bei einer vorteilhaften Weiterbildung der erfindungsgemäßen Lösung weist das Ringfilterelement eine erste Endscheibe sowie eine zweite Endscheibe auf, wobei von der ersten Endscheibe ein Rohrabschnitt nach unten absteht, in den der Endabscheider eingeschoben und gegenüber welchem der Endabscheider abgedichtet ist. Hierdurch ist es möglich, dass sich der Abscheidekörper und damit der Endabscheider nur über einen Teil der Höhe des Ringfilterelements erstrecken. Vorteilhaft wäre dies beispielsweise in Einsatzgebieten, bei welchen lediglich ein geringer Anteil an Wasser abgeschieden werden muss.

Zweckmäßig ist die Zarge an die zweite Endscheibe angeformt, insbesondere einstückig mit dieser ausgebildet. Hierdurch kann eine besonders kostengünstige Fertigung der Zarge, beispielsweise als Kunststoffspritzgussteil ermöglicht werden.

Die vorliegende Erfindung beruht gemäß der zweiten Alternative auf dem allgemeinen Gedanken, einen Endabscheider mit einem Abscheidekörper mit einem rotationssymmetrischen, kegelstumpfartigen und hydrophoben Sieb vorzusehen, wobei der kegelstumpfartige Abscheidekörper im Betriebszustand kopfüber angeordnet ist und sich dadurch nach unten konisch verjüngt. Hierdurch kann eine Adhäsionskraft sowie eine Kontaktfläche des an dem Abscheidekörper abgeschiedenen Wassers mit dem Abscheidekörper deutlich reduziert werden, da auf das abgeschiedene Wasser nunmehr auch eine senkrecht nach unten gerichtete Kraftkomponente wirkt, die versucht, den abgeschiedenen Wassertropfen vom Abscheidekörper abzuheben. Ein Kontakt des abgeschiedenen Wassers mit dem Abscheidekörper ist somit ausschließlich im Betriebszustand durch den strömenden Kraftstoffstrom bedingt, so dass im Nichtbetriebszustand das am Abscheidekörper abgeschiedene Wasser aufgrund der Schwerkraft und der überhängenden Abscheidewände des Abscheidekörpers vom Abscheidekörper löst und einfach nach unten in den Wassersammelraum sinken kann oder aufgrund geringerer Adhäsionskräfte zwar am Abscheidekörper verbleibt, jedoch deutlich leichter an diesem abläuft. Um den Endabscheider auch in herkömmlichen Filtereinrichtungen einsetzen zu können, ist eine rotationssymmetrische Zarge mit einer zylindrischen Außenkontur und außenliegenden Stützringen vorgesehen. Zwischen diesen Stützringen und dem eigentlichen Abscheidekörper sind sich in Axialrichtung erstreckende und sich keilartig nach unten verbreiternde Stege vorgesehen, die außen mit den Stützringen und innen linienförmig mit dem Abscheidekörper verbunden sind. Mit dem erfindungsgemäß vorgesehen rotationssymmetrischen Endabscheider kann somit nicht nur die Wasserabscheidung deutlich verbessert werden, da die Ableitung des abgeschiedenen Wasser beschleunigt und deren Kontakt zum Abscheidekörper reduziert wird, sondern dieser erfindungsgemäße Endabscheider kann auch besonders flexibel in gängigen Filterelementen eingesetzt werden, da seine Außenkontur zylindrisch gestaltet ist und dadurch einen Faltenstern eines den Endabscheider umgebenden Ringfilterelements abstützt. Die Neigung des Abscheidekörpers kann dabei zirka 5° bezüglich der Vertikalen betragen, wobei gilt, je größer der Neigungswinkel, umso geringer ist der Kontakt des abgeschiedenen Wassers mit dem Abscheidekörper und umso geringer sind auch die zwischen diesen beiden Bestandteilen wirkende Adhäsionskräfte.

Bei einer vorteilhaften Weiterbildung der erfindungsgemäßen Lösung ist die Zarge als Kunststoffspritzgussteil ausgebildet, wobei der Abscheidekörper zumindest in den Kunststoff der Stege eingebettet ist. Hierdurch kann eine zuverlässige Halterung des Abscheidekörpers an den Stegen gewährleistet und dadurch insgesamt ein vergleichsweise stabiler Endabscheider geschaffen werden.

Bei einer weiteren vorteilhaften Ausführungsform der erfindungsgemäßen Lösung ist der Abscheidekörper an zumindest einem Stirnende in einem ringförmigen Halter gefangen. Vorzugsweise sind sogar beide Stirnenden in einem jeweiligen ringförmigen Halter gefangen, wobei einer der beiden Halter, üblicherweise der obere Halter, zugleich als Dichtelement ausgebildet ist. Über einen derartigen als Dichtelement ausgebildeten oberen Halter kann der Endabscheider dicht in eine entsprechende kreisförmige Ausnehmung einer ersten Endscheibe des Ringfilterelements eingreifen. Der als Dichtelement ausgebildete Halter kann dabei aus demselben Kunststoff ausgebildet sein, wie die Stege und die Stützringe der Zarge oder aber auch aus einem speziellen Dichtkunststoff, so dass in diesem Fall die Zarge beispielsweise als Zweikomponenten-Spritzgussteil hergestellt werden kann.

Bei einer vorteilhaften Weiterbildung der erfindungsgemäßen Lösung ist der Abscheidekörper wie beschrieben an beiden Stirnenden in einem ringförmigen Halter gefangen, wobei die beiden Halter einen kleineren Durchmesser aufweisen als die Stützringe. Zusätzlich weist der obere Halter üblicherweise einen größeren Durchmesser auf als der untere Halter, wodurch die umgekehrte Kegelstumpfform realisiert wird. Dabei kann vorgesehen sein, dass der Abscheidekörper sowohl in den Kunststoff des oberen als auch in den Kunststoff des unteren Halters eingebettet, das heißt beispielsweise von diesem zumindest teilweise umspritzt ist. Durch die Verbindung der beiden Halter mit den Stegen kann eine besonders steife Zarge realisiert werden.

Die vorliegende Erfindung beruht weiter auf dem allgemeinen Gedanken, einen zuvor beschriebenen Endabscheider in einer Filtereinrichtung, beispielweise einem Kraftstofffilter oder einem Schmierstofffilter einzusetzen. Hierbei wird der Endabscheider in ein Ringfilterelement eingesetzt und kann dabei zugleich mit seiner Zarge, das heißt insbesondere mit seinen außenliegenden Stützringen, den Faltenstern des Ringfilterelements abstützen. Da die Außenkontur des Endabscheiders zylindrisch ist, kann der erfindungsgemäße Endabscheider auch bei herkömmlichen Filtereinrichtungen und herkömmlichen Ringfilterelementen eingesetzt werden, wodurch ein besonders flexibler Einsatz ermöglicht wird.

Bei einer vorteilhaften Weiterbildung der erfindungsgemäßen Filtereinrichtung greift der Endabscheider mit seinem Abscheidekörper durch die zweite, das heißt im vorliegenden Fall die untere, Endscheibe des Ringfilterelements hindurch und begrenzt mit dieser einen ringförmigen Wasserdurchlass in einem darunter angeordneten Wassersammelraum der Filtereinrichtung. Die äußere Wandung des ringförmigen Wasserdurchlasses wird dabei durch einen ringförmigen axialen Fortsatz der unteren Endscheibe des Ringfilterelements gebildet. Mittels des konischen Endabscheiders kann somit auf konstruktiv äußerst einfache Weise ein Abscheidekanal für aus dem Kraftstoff abgeschiedenes Wasser realisiert werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: eine Schnittdarstellung durch eine erfindungsgemäße Filtereinrichtung gemäß der ersten Alternative,
- Fig. 2: eine Schnittdarstellung durch ein Ringfilterelement mit einem darin integrierten Endabscheider,
- Fig. 3: eine Ansicht auf den Endabscheider aus Fig. 2,
- Fig. 4: eine Schnittdarstellung durch eine erfindungsgemäße Filtereinrichtung,
- Fig. 5: eine Schnittdarstellung durch ein Ringfilterelement mit einem darin integrierten erfindungsgemäßen Endabscheider,
- Fig. 6: eine Ansicht auf einen erfindungsgemäßen Endabscheider.

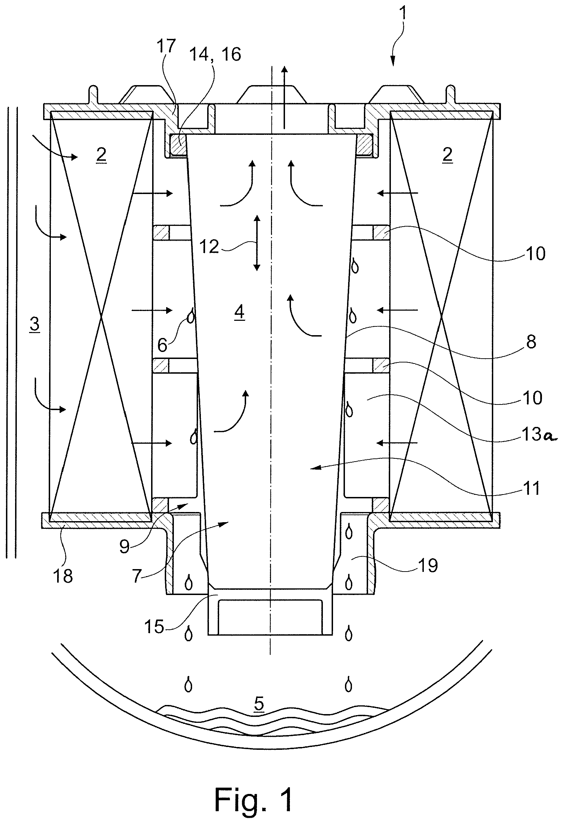

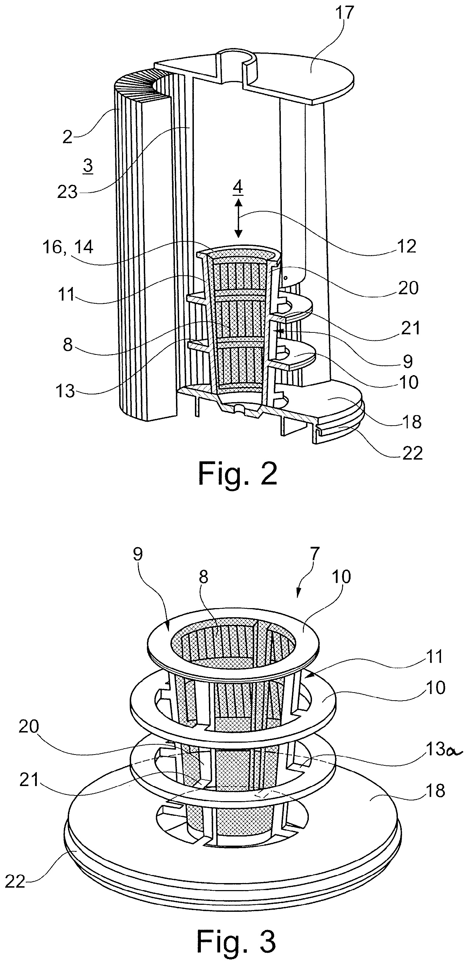

Entsprechend der Fig. 1, weist eine erfindungsgemäße Filtereinrichtung 1 gemäß der ersten Alternative, welche beispielsweise als Kraftstofffilter oder als Schmierstofffilter ausgebildet sein kann, ein Ringfilterelement 2 auf, welches im vorliegenden Fall von einem außenliegenden Rohraum 3 zu einem innenliegenden Reinraum 4 radial durchströmt ist. Unterhalb des Ringfilterelements 2 ist dabei ein Wassersammelraum 5 angeordnet, in welchem aus dem Kraftstoff bzw. Schmierstoff ausgeschiedenes Wasser 6 gesammelt werden kann. Innerhalb des Ringfilterelements 2, das heißt auf einer Reinseite, ist ein erfindungsgemäßer rotationssymmetrischer Endabscheider 7 angeordnet (vgl. auch die Fig. 2 und 3), der die eigentliche Wasserabscheidung bewirkt. Der Endabscheider 7 weist dabei einen Abscheidekörper 11 mit einem rotationssymmetrischen, kegelstumpfartigen und hydrophoben Sieb 8 auf, sowie eine rotationssymmetrische Zarge 9 mit einer zylindrischen Außenkontur und außenliegenden Stützringen 10 auf. Zwischen den Stützringen 10 und dem Abscheidekörper 11 sind dabei sich in im Wesentlichen in Axialrichtung 12 erstreckende Konusstege 20 vorgesehen, die über Radialstege 21 gegenüber den Stützringen 10 abgestützt sind, wobei die Konusstege 20 entlang der Außenseite des Abscheidekörpers 11 verlaufen und wobei zwischen dem Abscheidekörper 11 und den Stützringen 10 ein in Axialrichtung 12 und in Umfangsrichtung durchströmbarer Zwischenraum 13a angeordnet ist. Der Abscheidekörper 11 ist dabei derart angeordnet, dass der Kegelstumpf kopfüber steht, das heißt unten einen kleineren Durchmesser aufweist als oben. Die Zarge 9 ist als Kunststoffspritzgussteil ausgebildet, wobei der Abscheidekörper 11 zumindest in dem Kunststoff der Konusstege 20 eingebettet bzw. von diesem umspritzt ist. Hierdurch ist es möglich, den Abscheidekörper 11 entlang der Konusstege 20 auszusteifen.

Betrachtet man die Fig. 1 weiter, so kann man erkennen, dass der Abscheidekörper 11 sowohl an einem oberen als auch an einem unteren Stirnende in einem ringförmigen Halter 14, 15 gefangen ist. Der obere Halter 14 ist dabei als Dichtelement 16 ausgebildet. Beide Halter 14, 15 wiederum besitzen einen kleineren Durchmesser als die Stützringe 10, wobei der Endabscheider 7 mit seinem als Dichtelement 16 ausgebildeten oberen Halter 14 dicht in eine erste Endscheibe 17 des Ringfilterelements 2 eingreift, während er mit seinem gegenüberliegenden, unteren Halter 15 durch eine zweite Endscheibe 18 Ringfilterelements 2 hindurchgreift. Zugleich begrenzt der Endabscheider 7 mit seinem Abscheidekörper 11 zusammen mit der zweiten Endscheibe 18 einen ringförmigen Wasserdurchlass 19, über welchem am Endabscheider 7 abgeschiedenes Wasser 6 nach unten in den Wassersammelraum 5 gelangen kann.

Um die über die Höhe unterschiedlichen Abstände zwischen dem Abscheidekörper 11 und den Stützringen 10 ausgleichen zu können, weisen die Radialstege 21 unten eine größere Radialerstreckung auf als oben. Von besonderem Vorteil bei den Ausführungsformen gem. den Fig. 2 und 3 ist, dass bei diesen die Zarge 9 an die zweite Endscheibe 18 angeformt, insbesondere sogar einstückig mit dieser ausgebildet ist. Die zweite Endscheibe 18 hat zudem noch eine Dichtlippe 22 an der Außenseite, wodurch auf eine separate Dichtung verzichtet werden kann.

Des Weiteren ist bei den Ausführungsformen gem. den Fig. 2 und 3 erkennbar, dass sich der Abscheidekörper 11 nur über einen Teil der Höhe des Ringfilterelements 2 erstreckt. Von der ersten Endscheibe 17 steht ein Rohrabschnitt 23 nach unten ab, in den der Endabscheider 7 eingeschoben und gegenüber welchem der Endabscheider 7 abgedichtet ist.

Betrachtet man die Einbaulage des Abscheidekörpers 11, so kann man an allen Darstellungen erkennen, dass dieser kopfüber angeordnet ist, das heißt sich nach unten konisch verjüngt. Hierdurch kann erreicht werden, dass das an dem hydrophoben Sieb 8 abgeschiedene Wasser 6 einen möglichst geringen Kontakt mit dem Sieb 8 aufweist und dadurch auch nur durch geringere Adhäsionskräfte mit dem Sieb 8 verbunden ist, als dies bei senkrechten Wänden des Siebs 8 der Fall wäre. Auf die am Sieb 8 abgeschiedenen Wassertröpfchen wirkt somit eine schwerkraftbedingte Kraftkomponente nach unten, welche zugleich den Adhäsionskräften mit dem Sieb 8 entgegenwirkt. Hierdurch wird das Ablaufen des Wassers 6 am Sieb 8 erleichtert, wodurch die Gefahr eines unerwünschten Durchtritts des Wassers 6 durch das hydrophobe Sieb 8 reduziert werden kann. Durch die außen angeordneten Stützringe 10, welche den Faltenstern des Ringfilterelements 2 abstützen, wird die Abfließbewegung des abgeschiedenen Wassers 6 ebenfalls nicht behindert, wodurch ebenfalls ein Vorteil erzielt werden kann.

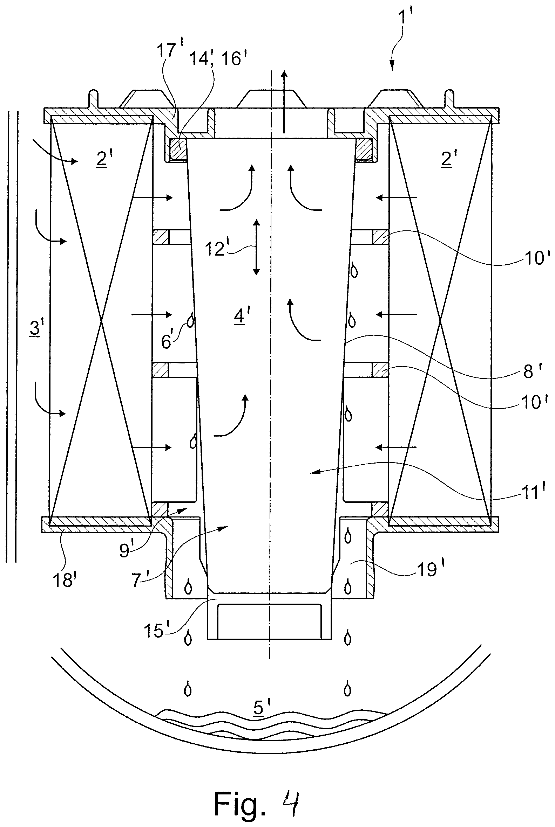

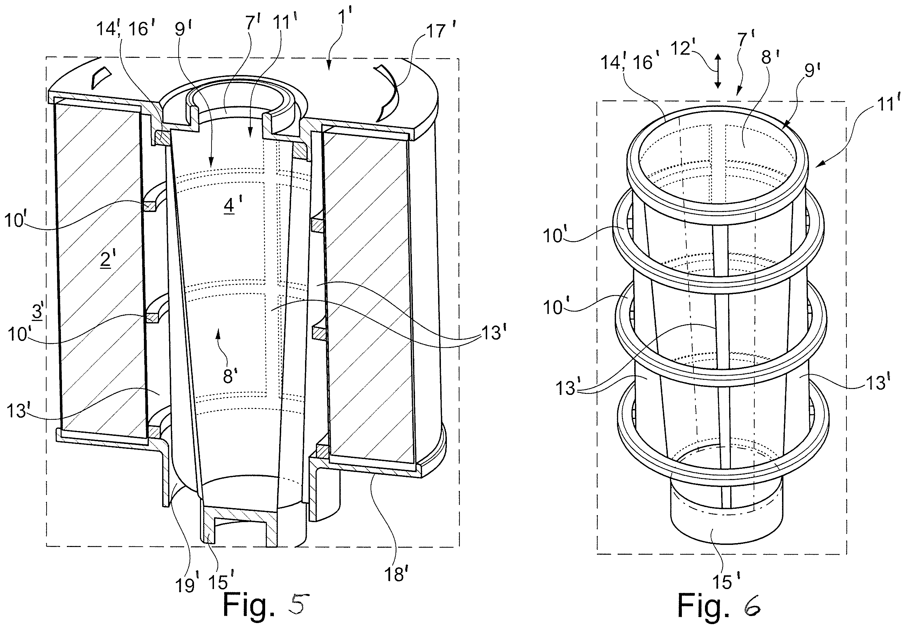

Entsprechend der Fig. 4, weist eine erfindungsgemäße Filtereinrichtung 1' gemäß der zweiten Alternative, welche ebenfalls beispielsweise als Kraftstofffilter oder als Schmierstofffilter ausgebildet sein kann, ein Ringfilterelement 2' auf, welches im vorliegenden Fall von einem außenliegenden Rohraum 3' zu einem innenliegenden Reinraum 4' radial durchströmt ist. Unterhalb des Ringfilterelements 2' ist dabei ein Wassersammelraum 5' angeordnet, in welchem aus dem Kraftstoff bzw. Schmierstoff ausgeschiedenes Wasser 6' gesammelt werden kann. Innerhalb des Ringfilterelements 2', das heißt auf einer Reinseite, ist ein erfindungsgemäßer rotationssymmetrischer Endabscheider 7' angeordnet (vgl. auch die Fig. 5 und 6), der die eigentliche Wasserabscheidung bewirkt. Der Endabscheider 7' weist dabei einen Abscheidekörper 11' mit einem rotationssymmetrischen, kegelstumpfartigen und hydrophoben Sieb 8' auf, sowie eine rotationssymmetrische Zarge 9' mit einer zylindrischen Außenkontur und außenliegenden Stützringen 10' auf. Zwischen den Stützringen 10' und dem Abscheidekörper 11' sind dabei sich in Axialrichtung 12' erstreckende, keilartige Stege 13' vorgesehen, die außen mit den Stützringen 10' und innen linienförmig mit dem Abscheidekörper 11', das heißt mit dem hydrophoben Sieb 8' verbunden sind.

Der Abscheidekörper 11' ist dabei derart angeordnet, dass der Kegelstumpf kopfüber steht, das heißt unten einen kleineren Durchmesser aufweist als oben. Die Zarge 9' ist als Kunststoffspritzgussteil ausgebildet, wobei der Abscheidekörper 11' zumindest in dem Kunststoff der Stege 13' eingebettet bzw. von diesem umspritzt ist. Hierdurch ist es möglich, den Abscheidekörper 11' entlang der Stege 13' auszusteifen.

Betrachtet man die Fig. 4 bis 6 weiter, so kann man erkennen, dass der Abscheidekörper 11' sowohl an einem oberen als auch an einem unteren Stirnende in einem ringförmigen Halter 14', 15' gefangen ist. Der obere Halter 14' ist dabei als Dichtelement 16' ausgebildet. Beide Halter 14', 15' wiederum besitzen einen kleineren Durchmesser als die Stützringe 10', wobei der Endabscheider 7' mit seinem als Dichtelement 16' ausgebildeten oberen Halter 14' dicht in eine erste Endscheibe 17' des Ringfilterelements 2' eingreift, während er mit seinem gegenüberliegenden, unteren Halter 15' durch eine zweite Endscheibe 18' Ringfilterelements 2' hindurchgreift. Zugleich begrenzt der Endabscheider 7' mit seinem Abscheidekörper 11' zusammen mit der zweiten Endscheibe 18' einen ringförmigen Wasserdurchlass 19', über welchem am Endabscheider 7' abgeschiedenes Wasser 6' nach unten in den Wassersammelraum 5' gelangen kann.

Betrachtet man die Einbaulage des Abscheidekörpers 11', so kann man an allen drei Darstellungen erkennen, dass dieser kopfüber angeordnet ist, das heißt sich nach unten konisch verjüngt. Hierdurch kann erreicht werden, dass das an dem hydrophoben Sieb 8' abgeschiedene Wasser 6' einen möglichst geringen Kontakt mit dem Sieb 8' aufweist und dadurch auch nur durch geringere Adhäsionskräfte mit dem Sieb 8' verbunden ist, als dies bei senkrechten Wänden des Siebs 8' der Fall wäre. Auf die am Sieb 8' abgeschiedenen Wassertröpfchen wirkt somit eine schwerkraftbedingte Kraftkomponente nach unten, welche zugleich den Adhäsionskräften mit dem Sieb 8' entgegenwirkt. Hierdurch wird das Ablaufen des Wassers 6' am Sieb 8' erleichtert, wodurch die Gefahr eines unerwünschten Durchtritts des Wassers 6' durch das hydrophobe Sieb 8' reduziert werden kann. Durch die außen angeordneten Stützringe 10', welche den Faltenstern des Ringfilterelements 2' abstützen, wird die Abfließbewegung des abgeschiedenen Wassers 6' ebenfalls nicht behindert, wodurch ebenfalls ein Vorteil erzielt werden kann.

Von besonderem Vorteil ist darüber hinaus, dass aufgrund der kegelstumpfartigen Struktur der Zarge 9, 9' bei beiden Alternativen ein vereinfachtes Spritzgusswerkzeug mit deutlich weniger Schiebern eingesetzt werden kann, wodurch auch weniger Verlustkerne in Kauf genommen werden müssen. Konkret bedeutet dies, dass Kosten bei der Werkzeugherstellung reduziert werden können, ebenso wie die zu wartenden Komponenten, wodurch die laufenden Wartungskosten gesenkt werden können.

Durch die zylindrische Außenkontur der Zarge 9, 9' bzw. des Endabscheider 7, 7' allgemein kann dieser auch in herkömmlichen Ringfilterelementen 2, 2' alternativ und damit äußerst flexibel eingesetzt werden.

## Patentansprüche

1. Rotationssymmetrischer Endabscheider (7) einer Filtereinrichtung (1), **dadurch gekennzeichnet,**
- **dass** ein Abscheidekörper (11) mit einem rotationssymmetrischen, kegelstumpfartigen und hydrophoben Sieb (8) vorgesehen ist,
- **dass** eine rotationssymmetrische Zarge (9) mit den Abscheidekörper (11) umgebenden Stützringen (10) vorgesehen ist, wobei zwischen den Stützringen (10) und dem Abscheidekörper (11) Konusstege (20) vorgesehen sind, die über Radialstege (21) gegenüber den Stützringen (10) abgestützt sind, wobei die Konusstege (20) entlang der Außenseite des Abscheidekörpers (11) verlaufen und wobei zwischen dem Abscheidekörper (11) und den Stützringen (10) ein in Axialrichtung (12) und in Umfangsrichtung durchströmbarer Zwischenraum (13) angeordnet ist.

2. Endabscheider nach Anspruch 1,
**dadurch gekennzeichnet,**
**dass** die Zarge (9) als Kunststoffspritzgussteil ausgebildet ist, wobei der Abscheidekörper (11) zumindest in den Kunststoff der Konusstege (20) eingebettet ist.

3. Endabscheider nach Anspruch 1 oder 2,
**dadurch gekennzeichnet,**
**dass** der Abscheidekörper (11) an zumindest einem Stirnende in einem ringförmigen Halter (14,15) gefangen ist.

4. Endabscheider nach Anspruch 3,
**dadurch gekennzeichnet,**
**dass** zumindest ein Halter (14) als Dichtelement (16) ausgebildet ist.

5. Endabscheider nach einem der vorhergehenden Ansprüche,
**dadurch gekennzeichnet,**
**dass** das Ringfilterelement (2) eine erste Endscheibe (17) sowie eine zweite Endscheibe (18) aufweist, wobei von der ersten Endscheibe (17) ein Rohrabschnitt (23) nach unten absteht, in den der Endabscheider (7) eingeschoben und gegenüber welchem der Endabscheider (7) abgedichtet ist.

6. Endabscheider nach Anspruch 5,
**dadurch gekennzeichnet,**
**dass** die Zarge (9) an die zweite Endscheibe (18) angeformt, insbesondere einstückig mit dieser ausgebildet, ist.

7. Endabscheider nach Anspruch 5 oder 6,
**dadurch gekennzeichnet,**
**dass** die zweite Endscheibe (18) an der Außenseite eine Dichtlippe (22) aufweist.

8. Endabscheider nach einem der vorhergehenden Ansprüche,
**dadurch gekennzeichnet,**
**dass** sich der Abscheidekörper (11) und damit der Endabscheider (7) nur über einen Teil der Höhe des Ringfilterelements (2) erstrecken.

9. Rotationssymmetrischer Endabscheider (7') einer Filtereinrichtung (1'),
**dadurch gekennzeichnet,**
- **dass** ein Abscheidekörper (11') mit einem rotationssymmetrischen, kegelstumpfartigen und hydrophoben Sieb (8') vorgesehen ist,
- **dass** eine rotationssymmetrische Zarge (9') mit einer zylindrischen Außenkontur und außenliegenden Stützringen (10') vorgesehen ist,
- **dass** zwischen den Stützringen (10') und dem Abscheidekörper (11') sich in Axialrichtung (12') erstreckende keilartige Stege (13') vorgesehen sind, die außen mit den Stützringen (10') und innen linienförmig mit dem Abscheidekörper (11') verbunden sind.

10. Endabscheider nach Anspruch 9,
**dadurch gekennzeichnet,**
**dass** die Zarge (9') als Kunststoffspritzgussteil ausgebildet ist, wobei der Abscheidekörper (11') zumindest in den Kunststoff der Stege (13') eingebettet ist.

11. Endabscheider nach Anspruch 9 oder 10,
**dadurch gekennzeichnet,**
**dass** der Abscheidekörper (11') an zumindest einem Stirnende in einem ringförmigen Halter (14',15') gefangen ist.

12. Endabscheider nach Anspruch 11,
**dadurch gekennzeichnet,**
**dass** zumindest ein Halter (14') als Dichtelement (16') ausgebildet ist.

13. Endabscheider nach Anspruch 11 oder 12,
**dadurch gekennzeichnet,**
**dass** der Abscheidekörper (11') an beiden Stirnenden in einem ringförmigen Halter (14',15') gefangen ist, wobei die beiden Halter (14',15') einen kleineren Durchmesser aufweisen als die Stützringe (10').

14. Filtereinrichtung (1,1'), insbesondere ein Kraftstoff- oder ein Schmierstofffilter, mit einem Endabscheider (7,7') nach einem der vorhergehenden Ansprüche.

15. Filtereinrichtung nach Anspruch 14,
**dadurch gekennzeichnet,**
**dass** ein Ringfilterelement (2,2') vorgesehen ist, in dessen Innenraum der Endabscheider (7,7') angeordnet ist und mit seiner Zarge (9,9') das Ringfilterelement (2,2') abstützt.

16. Filtereinrichtung nach einem der Ansprüche 14 oder 15,
**dadurch gekennzeichnet,**
**dass** sich der Endabscheider (7,7') im Einbauzustand konisch nach unten verjüngt.

## Claims

1. Rotationally symmetrical final separator (7) of a filter device (1), **characterised in**
- **that** a separator body (11) is provided having a rotationally symmetrical, frustoconical and hydrophobic sieve (8),
- **that** a rotationally symmetrical frame (9) is provided having support rings (10) surrounding the separator body (11), wherein between the support rings (10) and the separator body (11) are provided cone webs (20) which are supported via radial webs (21) opposite the support rings (10), wherein the cone webs (20) extend along the outer side of the separator body (11) and wherein between the separator body (11) and the support rings (10) is disposed an interspace (13) which can be flowed through in axial direction (12) and in circumferential direction.

2. Final separator according to claim 1,
**characterised in**
**that** the frame (9) is formed as a plastic injection-moulded part, wherein the separator body (11) is embedded at least into the plastic of the cone webs (20).

3. Final separator according to claim 1 or 2,
**characterised in**
**that** the separator body (11) is locked at at least one end face in an annular holder (14, 15).

4. Final separator according to claim 3,
**characterised in**
**that** at least one holder (14) is formed as a sealing element (16).

5. Final separator according to any one of the preceding claims,
**characterised in**
**that** the ring filter element (2) has a first end disc (17) and a second end disc (18), wherein from the first end disc (17) a tube portion (23) protrudes downwards, into which the final separator (7) is inserted and against which the final separator (7) is sealed.

6. Final separator according to claim 5,
**characterised in**
**that** the frame (9) is formed on the second end disc (18), in particular formed integrally therewith.

7. Final separator according to claim 5 or 6,
**characterised in**
**that** the second end disc (18) has on the outer side a sealing lip (22).

8. Final separator according to any one of the preceding claims,
**characterised in**
**that** the separator body (11) and therewith the final separator (7) extend only over a part of the height of the ring filter element (2).

9. Rotationally symmetrical final separator (7') of a filter device (1'),
**characterised in**
- **that** a separator body (11') is provided having a rotationally symmetrical, frustoconical and hydrophobic sieve (8'),
- **that** a rotationally symmetrical frame (9') is provided having a cylindrical outer contour and external support rings (10'),
- **that** between the support rings (10') and the separator body (11') are provided webs (13') extending like wedges in axial direction (12'), which are connected on the outside with the support rings (10') and on the inside in line-shaped manner with the separator body (11').

10. Final separator according to claim 9,
**characterised in**
**that** the frame (9') is formed as a plastic injection-moulded part, wherein the separator body (11') is embedded at least into the plastic of the webs (13').

11. Final separator according to claim 9 or 10,
**characterised in**
**that** the separator body (11') is locked at at least one end face in an annular holder (14',15').

12. Final separator according to claim 11,
**characterised in**
**that** at least one holder (14') is formed as a sealing element (16').

13. Final separator according to claim 11 or 12,
**characterised in**
**that** the separator body (11') is locked at both end faces in an annular holder (14',15'), wherein the two holders (14',15') have a smaller diameter than the support rings (10').

14. Filter device (1,1'), in particular a fuel filter or a lubricant filter, having a final separator (7,7') according to any one of the preceding claims.

15. Filter device according to claim 14,
**characterised in**
**that** a ring filter element (2,2') is provided, in the interior of which the final separator (7,7') is disposed and supports with its frame (9,9') the ring filter element (2,2').

16. Filter device according to any of the claims 14 or 15,
**characterised in**
**that** the final separator (7,7') in installed state tapers conically downwards.

## Revendications

1. Séparateur final à symétrie de rotation (7) pour un dispositif de filtre (1), **caractérisé en ce**
- **qu'**un corps de séparation (11) est prévu avec un tamis (8) à symétrie de rotation, tronconique et hydrophobe,
- **qu'**un corps de boîte à symétrie de rotation (9) est prévu avec les anneaux d'appui (10) entourant le corps de séparation (11), dans lequel des traverses coniques (20) sont prévues entre les anneaux d'appui (10) et le corps de séparation (11) qui sont supportées par le biais de traverses radiales (21) par rapport aux anneaux d'appui (10), dans lequel les traverses coniques (20) s'étendent le long du côté extérieur du corps de séparation (11) et dans lequel un espace intermédiaire (13) traversable dans le sens axial (12) et dans le sens périphérique est agencé entre le corps de séparation (11) et les anneaux d'appui (10).

2. Séparateur final selon la revendication 1,
**caractérisé en ce**
**que** le corps de boîte (9) est réalisé en tant que partie moulée par injection de matière plastique, dans lequel le corps de séparation (11) est intégré au moins dans la matière plastique des traverses coniques (20).

3. Séparateur final selon la revendication 1 ou 2,
**caractérisé en ce**
**que** le corps de séparation (11) est fixé sur au moins une extrémité frontale dans un support (14, 15) annulaire.

4. Séparateur final selon la revendication 3,
**caractérisé en ce**
**qu'**au moins un support (14) est réalisé en tant qu'élément étanche (16).

5. Séparateur final selon l'une quelconque des revendications précédentes,
**caractérisé en ce**
**que** l'élément de filtre annulaire (2) présente un premier disque d'extrémité (17) ainsi qu'un second disque d'extrémité (18), dans lequel une section tubulaire (23) dépasse vers le bas du premier disque d'extrémité (17), dans laquelle le séparateur final (7) est enfoncé et par rapport auquel le séparateur final (7) est rendu étanche.

6. Séparateur final selon la revendication 5,
**caractérisé en ce**
**que** le corps de boîte (9) est formé sur le second disque d'extrémité (18), en particulier est réalisé d'un seul tenant avec celui-ci.

7. Séparateur final selon la revendication 5 ou 6,
**caractérisé en ce**
**que** le second disque d'extrémité (18) présente sur le côté extérieur une lèvre d'étanchéité (22).

8. Séparateur final selon l'une quelconque des revendications précédentes,
**caractérisé en ce**
**que** le corps de séparation (11) et ainsi le séparateur final (7) s'étendent seulement sur une partie de la hauteur de l'élément de filtre annulaire (2).

9. Séparateur final à symétrie de rotation (7') d'un dispositif de filtre (1'), **caractérisé en ce**
- **qu'**un corps de séparation (11') est prévu avec un tamis (8') à symétrie de rotation, tronconique et hydrophobe,
- **qu'**un corps de boîte (9') à symétrie de rotation avec un contour extérieur cylindrique et des anneaux d'appui (10') extérieurs est prévu,
- **que** des traverses (13') cunéiformes s'étendant entre les anneaux d'appui (10') et le corps de séparation (11') dans le sens axial (12') sont prévues, lesquelles sont raccordées à l'extérieur avec les anneaux d'appui (10') et à l'intérieur en forme de ligne avec le corps de séparation (11').

10. Séparateur final selon la revendication 9,
**caractérisé en ce**
**que** le corps de boîte (9') est réalisé en tant que partie moulée par injection de matière plastique, dans lequel le corps de séparation (11') est intégré au moins dans la matière plastique des traverses (13').

11. Séparateur final selon la revendication 9 ou 10,
**caractérisé en ce**
**que** le corps de séparation (11') est fixé sur au moins une extrémité frontale dans un support (14', 15') annulaire.

12. Séparateur final selon la revendication 11,
**caractérisé en ce**
**qu'**au moins un support (14') est réalisé en tant qu'élément d'étanchéité (16').

13. Séparateur final selon la revendication 11 ou 12,
**caractérisé en ce**
**que** le corps de séparation (11') est fixé sur les deux extrémités frontales dans un support (14', 15') annulaire, dans lequel les deux supports (14', 15') présentent un diamètre plus petit que les anneaux d'appui (10').

14. Dispositif de filtre (1, 1'), en particulier un filtre à carburant ou un filtre à graisse, avec un séparateur final (7, 7') selon l'une quelconque des revendications précédentes.

15. Dispositif de filtre selon la revendication 14,
**caractérisé en ce**
**qu'**un élément de filtre annulaire (2, 2') est prévu, dans l'espace intérieur duquel le séparateur final (7, 7') est agencé et supporte avec son corps de boîte (9, 9') l'élément de filtre annulaire (2, 2').

16. Dispositif de filtre selon l'une quelconque des revendications 14 ou 15,
**caractérisé en ce**
**que** le séparateur final (7, 7') se rétrécit à l'état installé en cône vers le bas.
